# EUROPEAN PATENT APPLICATION

(11) **EP 2 843 467 A1**
(43) Date of publication of application: **04.03.2015**
(21) Application number: 14182998.6
(22) Date of filing: 01.09.2014
(51) Int. Cl.: G02F 1/1362, G02F 1/1343

(54) **Liquid crystal display**

(30) Priority: 02.09.2013 KR 20130104982
(71) Applicant: Samsung Display Co., Ltd., Gyeonggi-Do (KR)
(72) Inventor: Son, Ock Soo, 203 Jung-gu, Seoul (KR); Kang, Young Gu, A-2412 Hwaseong-si, Gyeonggi-do (KR); Kim, Hyun Wuk, Yongin-si, Gyeonggi-do (KR); Song, Jean Ho, 305-1403 Yongin-si, Gyeonggi-do (KR); Jang, Eun Je, 312-1501 Hwaseong-si, Gyeonggi-do (KR); Hong, Sung Jin, 505-101 Seoul (KR)
(74) Representative: Dr. Weitzel & Partner

(57) **Abstract**

A liquid crystal display includes an insulation substrate, a gate line and a data line disposed on the insulation substrate, a first passivation layer disposed on the gate line and the data line, a first common electrode which is disposed on the first passivation layer and overlaps with the data line, an insulating layer disposed on the first common electrode, a second common electrode disposed on the insulating layer, a second passivation layer disposed on the second common electrode, and a pixel electrode disposed on the second passivation layer.

## Description

### BACKGROUND

### (a) Field

The invention relates to a liquid crystal display ("LCD"), and more particularly, to an LCD capable of preventing a mixed color between adjacent pixels and enhancing transmittance.

### (b) Description of the Related Art

A liquid crystal display ("LCD") which is one of the most common types of flat panel displays currently in use, is a display device which rearranges liquid crystal molecules of a liquid crystal layer by applying voltages to electrodes to control an amount of transmitted light.

The LCD has an advantage of easily forming a thin film shape, for example, but has a disadvantage in that side visibility deteriorates compared with front visibility, and in order to solve the disadvantage, various types of alignments of the liquid crystal and driving methods have been developed. As a method for implementing a wide viewing angle, an LCD in which a pixel electrode and a common electrode are formed on one substrate has received attention.

In such a liquid crystal display, at least one of two field generating electrodes of the pixel electrode and a plurality of cutouts is defined in the common electrode, and a plurality of branch electrodes is defined by the plurality of cutouts.

### SUMMARY

In a liquid crystal display ("LCD") in which a pixel electrode and a common electrode are disposed on one substrate, since liquid crystal molecules move in a horizontal direction, a mixed color at a side between pixels displaying different colors may be generated.

When polarities of data voltages applied to pixel electrodes provided in adjacent pixels are different from each other, an unnecessary fringe field is generated between the data line and the common electrode around the data line, and as a result, transmittance at an edge of the pixel area is decreased.

The invention has been made in an effort to provide a liquid crystal display having advantages of preventing a mixed color between pixels displaying different colors and increasing transmittance.

In an exemplary embodiment, an exemplary embodiment of the invention provides a liquid crystal display, including an insulation substrate, a gate line and a data line disposed on the insulation substrate, a first passivation layer disposed on the gate line and the data line, a first common electrode which is disposed on the first passivation layer and overlaps with the data line, an insulating layer disposed on the first common electrode, a second common electrode disposed on the insulating layer, a second passivation layer disposed on the second common electrode, and a pixel electrode disposed on the second passivation layer.

In an exemplary embodiment, the first common electrode may overlap with the gate line, and the first common electrode may include a first portion overlapping with the gate line and a second portion overlapping with the data line.

In an exemplary embodiment, the LCD may further include a light blocking member and a color filter disposed below the insulating layer, in which the first portion of the first common electrode may overlap with the light blocking member.

In an exemplary embodiment, the LCD may further include a light blocking member and a color filter disposed below the insulating layer. The first common electrode may be disposed on or below the light blocking member and the color filter.

In an exemplary embodiment, the first common electrode may be disposed below the light blocking member, and at the overlapping portion of the first common electrode and the light blocking member, edges of the first common electrode and the light blocking member may coincide with each other.

In an exemplary embodiment, the first common electrode may be disposed on the entire surface of the insulation substrate, and the second common electrode may be disposed in a region overlapping with the pixel electrode.

In an exemplary embodiment, a first edge of the first common electrode and a second edge most adjacent to the first common electrode among edges of the pixel electrode may be separated from each other.

In an exemplary embodiment, a distance between the first edge and the second edge may be about 2.45 micrometers (µm) to about 3.45 µm.

In an exemplary embodiment, an edge adjacent to the data line among the edges of the pixel electrode may further protrude toward the data line than an edge adjacent to the data line among the edges of the second common electrode.

In an exemplary embodiment, the second common electrode may have a plate-like planar shape, the pixel electrode may include a plurality of branch electrodes, and the plurality of branch electrodes may overlap with the second common electrode.

According to the exemplary embodiment of the invention, it is possible to effectively prevent a mixed color between pixels displaying different colors and increase transmittance.

### BRIEF DESCRIPTION OF THE DRAWINGS

The above and other exemplary embodiments, advantages and features of this disclosure will become more apparent by describing in further detail exemplary embodiments thereof with reference to the accompanying drawings, in which:
FIG. 1 is a plan view illustrating an exemplary embodiment of a liquid crystal display ("LCD") according to the invention.
FIG. 2 is a cross-sectional view of the LCD of FIG. 1 taken along line II-II.
FIG. 3 is a cross-sectional view illustrating the LCD of FIG. 1 taken along line III-III.
FIGS. 4A and 4B are schematic cross-sectional views for describing the exemplary embodiment of a structure and a simulation result of the LCD according to the invention.
FIGS. 5A and 5B are schematic cross-sectional views for describing the exemplary embodiment of a structure and a simulation result of the LCD according to the invention.
FIG. 6 is a plan view illustrating another exemplary embodiment of an LCD according to the invention.
FIG. 7 is a cross-sectional view of the LCD of FIG. 6 taken along line VII-VII.
FIG. 8 is a cross-sectional view of the LCD of FIG. 6 taken along line VIII-VIII.
FIGS. 9 to 16 are cross-sectional views illustrating an exemplary embodiment of a part of a manufacturing method of an LCD according to the invention.
FIG. 17 is a plan view illustrating another exemplary embodiment of an LCD according to the invention.
FIG. 18 is a plan view for describing a shape of a first common electrode of the LCD of FIG. 17.
FIG. 19 is a cross-sectional view of the LCD of FIG. 17 taken along line XIX-XIX.
FIG. 20 is a cross-sectional view of the LCD of FIG. 17 taken along line XX-XX.
FIG. 21 is a plan view illustrating another exemplary embodiment of an LCD according to the invention.
FIG. 22 is a cross-sectional view of the LCD of FIG. 21 taken along line XXII-XXII.
FIG. 23 is a cross-sectional view illustrating the LCD of FIG. 21 taken along line XXIII-XXIII.

### DETAILED DESCRIPTION

The invention will be described more fully hereinafter with reference to the accompanying drawings, in which exemplary embodiments of the invention are shown. As those skilled in the art would realize, the described embodiments may be modified in various different ways, all without departing from the scope of the invention.

In the drawings, the thickness of layers, films, panels, regions, etc., are exaggerated for clarity. Like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element," "component," "region," "layer" or "section" discussed below could be termed a second element, component, region, layer or section without departing from the teachings herein.

The terminology used herein is for the purpose of describing particular embodiments only and is not intended to be limiting. As used herein, the singular forms "a," "an," and "the" are intended to include the plural forms, including "at least one," unless the content clearly indicates otherwise. "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10%, 5% of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

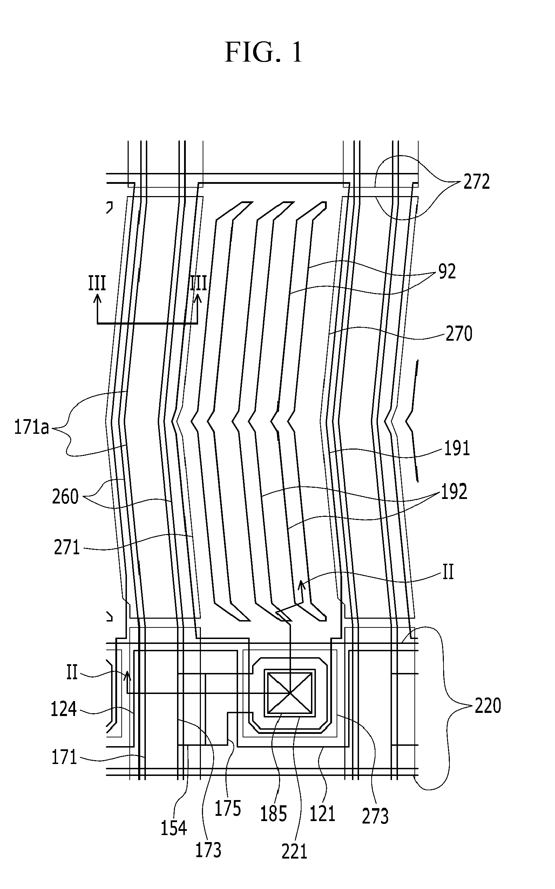

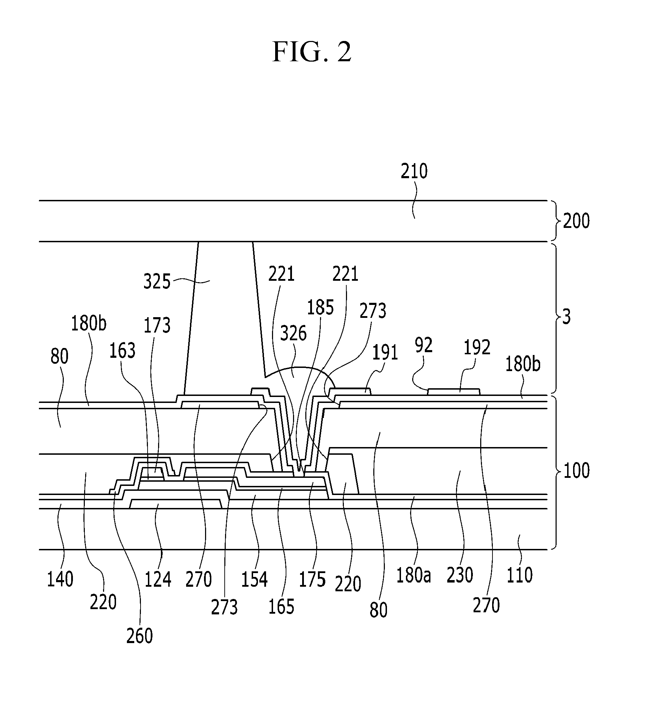

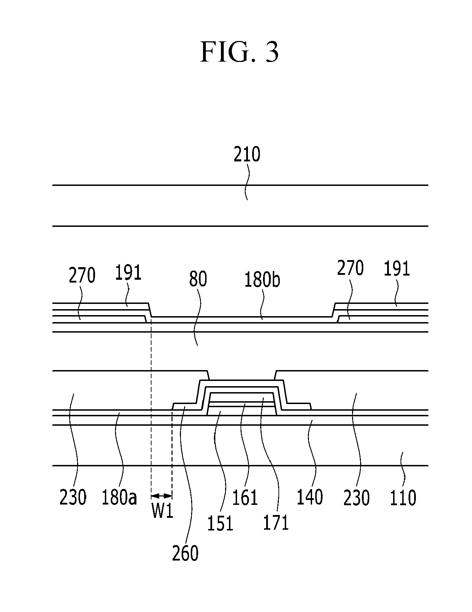

First, a liquid crystal display ("LCD") according to an exemplary embodiment of the invention will be described with reference to FIGS. 1 to 3. FIG. 1 is a plan view illustrating an LCD according to an exemplary embodiment of the invention, FIG. 2 is a cross-sectional view of the LCD of FIG. 1 taken along line II-II, and FIG. 3 is a cross-sectional view of the LCD of FIG. 1 taken along line III-III.

The LCD according to the exemplary embodiment of the invention includes a lower panel 100 and an upper panel 200 facing each other, and a liquid crystal layer 3 interposed between the two panels 100 and 200.

First, the lower panel 100 will be described.

A gate conductor including a gate line 121 is disposed on a first insulation substrate 110 including transparent glass, plastic, or the like.

The gate line 121 includes a gate electrode 124 and a wide end portion (not illustrated) for connection with another layer or an external driving circuit. In an exemplary embodiment, the gate line 121 may include aluminum-based metal such as aluminum (Al) or an aluminum alloy, silver-based metal such as silver (Ag) or a silver alloy, copper-based metal such as copper (Cu) or a copper alloy, molybdenum-based metal such as molybdenum (Mo) or a molybdenum alloy, chromium (Cr), tantalum (Ta), and titanium (Ti), for example. However, the invention is not limited thereto, and the gate line 121 may have a multilayered structure including at least two conductive layers having different physical properties.

A gate insulating layer 140 including silicon nitride (SiNx) or silicon oxide (SiOx) is disposed on the gate conductor. In an exemplary embodiment, the gate insulating layer 140 may have a multilayered structure including at least two insulating layers having different physical properties.

Semiconductors 151 and 154 including amorphous silicon or polysilicon are disposed on the gate insulating layer 140. The semiconductors 151 and 154 may include oxide semiconductors.

The semiconductors 151 and 154 include a first portion 151 disposed below the data line 171, and a second portion 154 disposed below the source electrode 173 and the drain electrode 175. The first portion 151 and the second portion 154 are connected to each other.

Ohmic contacts 161, 163, and 165 are disposed on the second portion 154 of the semiconductors 151 and 154. In an exemplary embodiment, the ohmic contacts 161, 163, and 165 may include a material such as n+ hydrogenated amorphous silicon in which n-type impurity such as phosphorus is doped at a high concentration or silicide, for example. Among the ohmic contacts 161, 163, and 165, the first ohmic contact 161 is disposed below the data line 171, and the second and third ohmic contacts 163 and 165 make a pair to be disposed on the second portion 154 of the semiconductors 151 and 154. The first ohmic contact 161 and the second ohmic contact 163 are connected to each other. In the case where the semiconductors 151 and 154 are the oxide semiconductors, the ohmic contacts 161, 163, and 165 may be omitted.

A data conductor including a data line 171 including a source electrode 173 and a drain electrode 175 is disposed on the ohmic contacts 161, 163, and 165 and the gate insulating layer 140.

The data line 171 includes a wide end portion (not illustrated) for connection with another layer or an external driving circuit. The data line 171 transfers a data signal and substantially extends in a vertical direction to cross the gate line 121.

In this case, the data line 171 may have a first curved portion 171 a having a curved shape in order to acquire maximum transmittance of the liquid crystal display, and the first curved portion 171 a may have a V-lettered shape which is disposed in a middle region of a pixel area in a plan view. A second curved portion (not illustrated) which is curved to provide a predetermined angle with the first curved portion 171a may be further included in the middle region of the pixel area.

In an exemplary embodiment, the first curved portion 171 a of the data line 171 may be curved to provide an angle of about 7 degrees (°) with a vertical reference line which provides an angle of 90° with an extending direction of the gate line 121. The second curved portion disposed in the middle region of the pixel area may be further curved to provide an angle of about 7° to about 15° with the first curved portion.

The source electrode 173 is a part of the data line 171, and disposed on the same line as the data line 171. The drain electrode 175 is provided to extend in parallel with the source electrode 173. Accordingly, the drain electrode 175 is parallel with the part of the data line 171.

However, the shapes of the source electrode and the drain electrode are not limited thereto, and the source electrode and the drain electrode may have various shapes.

The gate electrode 124, the source electrode 173 and the drain electrode 175 provide one thin film transistor ("TFT") together with the second portion 154 of the semiconductors 151 and 154, and a channel of the TFT is disposed in the second portion 154 of the semiconductors 151 and 154 between the source electrode 173 and the drain electrode 175.

The LCD according to the exemplary embodiment of the invention includes the source electrode 173 disposed on the same line with the data line 171 and the drain electrode 175 extending in parallel with the data line 171, and as a result, a width of the TFT may be increased while an area occupied by the data conductor is not increased, thereby increasing an aperture ratio of the liquid crystal display.

In exemplary embodiments, the data line 171 and the drain electrode 175 may include refractory metal such as molybdenum, chromium, tantalum and titanium or an alloy thereof, and may have a multilayered structure including a refractory metal layer (not illustrated) and a low resistive conductive layer (not illustrated). An example of the multilayered structure may include a double layer including a chromium or molybdenum (alloy) lower layer and an aluminum (alloy) upper layer, and a triple layer including a molybdenum (alloy) lower layer, an aluminum (alloy) intermediate layer and a molybdenum (alloy) upper layer. However, the invention is not limited thereto, and the data line 171 and the drain electrode 175 may include various metals or conductors in addition to the metal.

A first passivation layer 180a is disposed on the data conductor 171, 173 and 175, the gate insulating layer 140 and the second portion 154 of the exposed semiconductors 151 and 154. In an exemplary embodiment, the first passivation layer 180a may include an organic insulating material or an inorganic insulating material.

A first common electrode 260 is disposed on the first passivation layer 180a.

The first common electrode 260 is disposed in a region corresponding to the data line 171, and a width of the first common electrode 260 taken in a plan view is larger than that of the data line 171.

In the case of the LCD according to the exemplary embodiment, since the source electrode 173 is a part of the data line 171, the first common electrode 260 is provided even at a position corresponding to the source electrode 173.

The first common electrode 260 extends in a direction parallel to the data line 171, and receives a common voltage from the outside of the display area.

A light blocking member 220 and a color filter 230 are disposed on the first passivation layer 180a and the first common electrode 260. The light blocking member 220 is provided at a position corresponding to the gate line 121 and the TFT, does not overlap with the pixel electrode 191 except for a portion where the pixel electrode 191 and the drain electrode 175 are connected to each other, and does not overlap with the data line 171 except for a portion where the gate line 121 and the data line 171 overlap with each other. A first opening 221 is defined in the light blocking member 220 by removing a periphery of the light blocking member 220 at the first contact hole 185 where the drain electrode 175 and the pixel electrode 191 are connected to each other.

The color filter 230 may partially overlap with the light blocking member 220, and is substantially disposed in a region corresponding to a region where the pixel electrode 191 is provided.

In exemplary embodiments, the color filter 230 may uniquely display one of the primary colors, and an example of the primary colors may include three primary colors such as red, green and blue, for example, or yellow, cyan, magenta, and the like. Although not illustrated, the color filters may further include a color filter displaying a mixed color of the primary colors or white in addition to the primary colors.

Although not illustrated, an overcoat (not illustrated) may be disposed on the light blocking member 220 and the color filter 230. The overcoat prevents pigment components of the light blocking member 220 and the color filter 230 from being dispersed.

In the illustrated exemplary embodiment, the first common electrode 260 is disposed below the light blocking member 220 or the color filter 230, but the invention is not limited thereto, and the first common electrode 260 may be disposed on the light blocking member 220 or the color filter 230.

An insulating layer 80 is disposed on the first common electrode 260, the color filter 230 and the light blocking member 220.

In an exemplary embodiment, the insulating layer 80 may include an organic material, has a relative large thickness, and provides a flat surface. However, the invention is not limited thereto, and the insulating layer 80 may include an inorganic material.

A second common electrode 270 is disposed on the insulating layer 80. In an exemplary embodiment, the second common electrode 270 has a planar shape, and is disposed in a region corresponding to most of the pixel area. The second common electrodes 270 disposed at the adjacent pixels are connected to each other to receive a common voltage having a predetermined magnitude supplied from the outside of the display area.

The second common electrode 270 includes a vertical portion 271 extending parallel to the data line 171 between the two adjacent data lines 171 and a connecting portion 272. The second common electrodes 270 disposed in the pixels adjacent to each other in a pixel row direction are connected to each other through the connecting portion 272. Accordingly, the second common electrodes 270 disposed in all the pixel areas to be connected to each other may receive a voltage having a predetermined magnitude from an external common voltage applying unit. A second opening 273 is defined in the second common electrode 270 around the first contact hole 185 where the pixel electrode 191 and the drain electrode 175 are connected to each other.

An LCD according to another exemplary embodiment of the invention may further include a common voltage line (not illustrated) disposed in and/or on the same layer as the gate line 121 or the data line 171 and the second common electrode 270 is connected to the common voltage line through a contact hole (not illustrated) defined in an insulating layer disposed on the common voltage line to receive the common voltage, thereby preventing signal delay of the common voltage.

A second passivation layer 180b is disposed on the second common electrode 270. The second passivation layer 180b may include an organic insulating material or an inorganic insulating material.

A pixel electrode 191 is disposed on the second passivation layer 180b. The pixel electrode 191 includes a curved edge which is substantially parallel with the first curved portion 171a of the data line 171. A plurality of cutouts 92 is defined in the pixel electrode 191, and the pixel electrode 191 includes a plurality of branch electrodes 192 defined by the plurality of cutouts 92.

A first contact hole 185 exposing the drain electrode 175 is defined in the first passivation layer 180a, the insulating layer 80 and the second passivation layer 180b. The pixel electrode 191 is physically and electrically connected to the drain electrode 175 through the first contact hole 185 to receive a voltage from the drain electrode 175.

As illustrated in FIG. 3, when viewed from a cross-sectional shape, an edge adjacent to two adjacent data lines 171 among edges of the second common electrode 270 is disposed inside the edge of the pixel electrode 191. That is, as illustrated in FIG. 1, when viewed from a planar shape, an edge adjacent to two adjacent data lines 171 among edges of the pixel electrode 191 further protrudes toward the data line 171 than the edge adjacent to two adjacent data lines 171 among edges of the second common electrode 270.

A spacer 325 and a colored member 326 are disposed on the lower panel 100. The spacer 325 maintains a gap between the lower panel 100 and the upper panel 200, and the colored member 326 covers the first contact hole 185 to effectively prevent light leakage in the first contact hole 185 which does not overlap with the light blocking member 220. The spacer 325 and the colored member 326 may be disposed in and/or on the same layer.

However, according to an LCD according to another exemplary embodiment of the invention, the spacer 325 may be disposed on the upper panel 200.

Although not illustrated, an alignment layer is coated on the pixel electrode 191 and the second passivation layer 180b, and the alignment layer may be a horizontal alignment layer and be rubbed in a predetermined direction. However, in an LCD according to another exemplary embodiment of the invention, the alignment layer includes a photoreactive material to be photo-aligned.

Next, the upper panel 200 will be described.

The upper panel 200 includes a second insulation substrate 210 including transparent glass, plastic, or the like and an alignment layer (not illustrated) disposed on the second insulation substrate 210.

The LCD according to the exemplary embodiment includes the light blocking member 220 and the color filter 230 disposed on the lower panel 100, but in the case of an LCD according to another exemplary embodiment of the invention, at least one of the light blocking member 220 and the color filter 230 may be disposed on the upper panel 200, not the lower panel 100.

The liquid crystal layer 3 includes a liquid crystal material having positive dielectric anisotropy. The liquid crystal molecules of the liquid crystal layer 3 are aligned so that long-axial directions thereof are parallel to the panels 100 and 200 without applying the electric field to the liquid crystal layer 3. However, according to an LCD according to another exemplary embodiment of the invention, the liquid crystal layer 3 may include a liquid crystal material having negative dielectric anisotropy.

The pixel electrode 191 receives a data voltage from the drain electrode 175, and the first common electrode 260 and the second common electrode 270 receive a common voltage having a predetermined magnitude from a common voltage applying unit disposed outside the display area.

The pixel electrode 191 and the second common electrode 270 which are field generating electrodes generate an electric field and thus the liquid crystal molecules of the liquid crystal layer 3 disposed on the pixel electrode 191 and the second common electrode 270 rotate in a direction parallel to the direction of the electric field. Polarization of light passing through the liquid crystal layer varies according to the determined rotation directions of the liquid crystal molecules.

The edge of the first common electrode 260 does not overlap with the pixel electrode 191, and adjacent edges among the edges of the first common electrode 260 and the edges of the pixel electrode 191 are separated from each other at a first distance W1 taken in a plan view. In an exemplary embodiment, the first distance W1 between the adjacent edges among the edges of the first common electrode 260 and the edges of the pixel electrode 191 may be about 2.45 micrometers (µm) to about 3.45 µm.

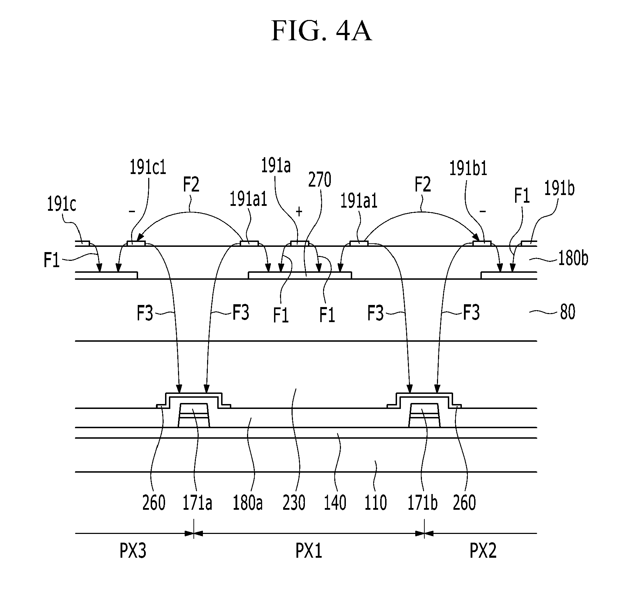

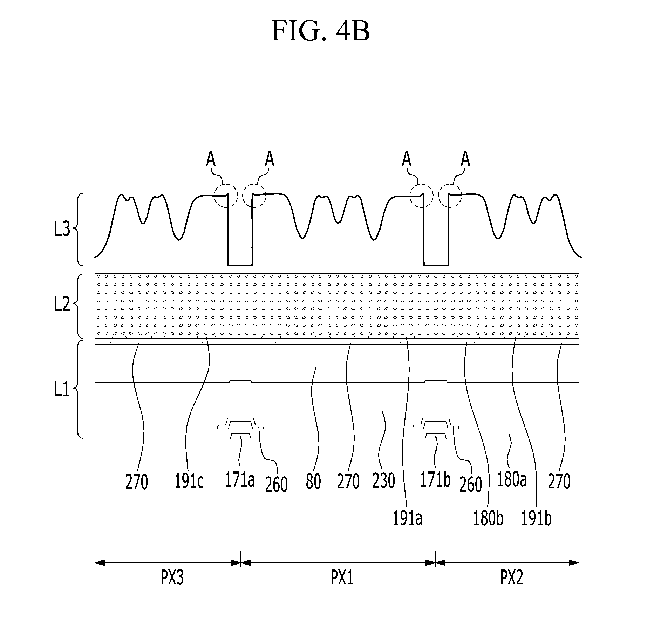

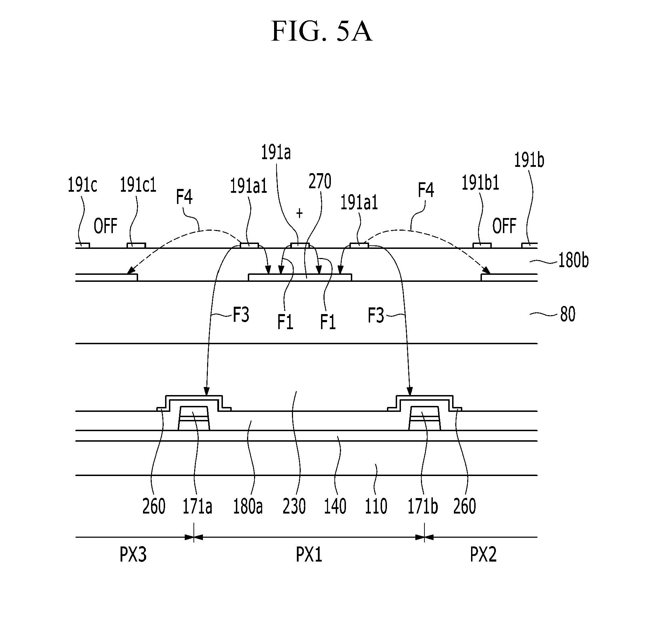

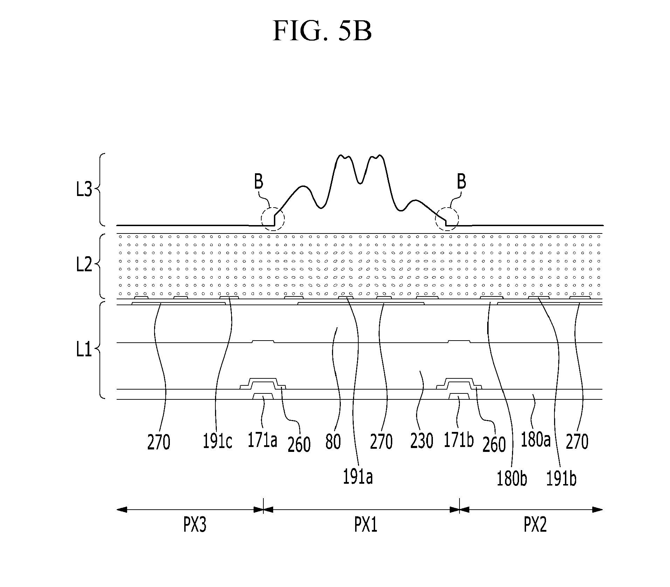

Next, referring to FIGS. 4A 4B, 5A and 5B, characteristics of the LCD according to the exemplary embodiment of the invention will be described. FIG. 4A is a schematic cross-sectional view for describing a structure of the LCD according to the exemplary embodiment of the invention, and FIG. 4B is a diagram illustrating a simulation result of the LCD of FIG. 4A. FIG. 5A is a schematic cross-sectional view for describing a structure of the LCD according to the exemplary embodiment of the invention, and FIG. 5B is a diagram illustrating a simulation result of the LCD of FIG. 5A.

In FIGS. 4B and 5B, a first portion L1 is a schematic cross-sectional view of the liquid crystal display, and a second portion L2 represents arrangement of liquid crystal directors, and a third portion L3 represents transmittance.

First, a case where respective data voltages are applied to a first pixel electrode 191 a, and a second pixel electrode 191b and a third pixel electrode 191c disposed at both sides of the first pixel electrode 191 a, will be described with reference to FIGS. 4A and 4B.

Referring to FIG. 4A, a first data line 171a and a second data line 171b are disposed on the first insulation substrate 110 to be adjacent to each other.

The first passivation layer 180a is disposed on the first data line 171 a and the second data line 171b, and the first common electrode 260 is disposed on the first passivation layer 180a. The first common electrode 260 is provided at a position corresponding to the first data line 171a and the second data line 171b, and a width of the first common electrode 260 taken in a plan view is larger than a width of each of the first data line 171a and the second data line 171b.

The insulating layer 80 is disposed on the first common electrode 260. The second common electrode 270 is disposed on the insulating layer 80. The second common electrode 270 does not overlap with the first data line 171a and the second data line 171b except for the connecting portion 272, and is disposed in a first pixel area PX1 between the first data line 171a and the second data line 171b, and between a second pixel area PX2 and a third pixel area PX3.

The second passivation layer 180b is disposed on the second common electrode 270. The first pixel electrode 191a, the second pixel electrode 191b and the third pixel electrode 191c are disposed on the second passivation layer 180b.

The first pixel electrode 191a is disposed in the first pixel area PX1, the second pixel electrode 191b is disposed in the second pixel area PX2 disposed next to the first pixel area PX1, and the third pixel electrode 191c is disposed in the third pixel area PX3 disposed next to the first pixel area PX1.

Edges adjacent to the data lines 171a and 171b among the edges of the second common electrodes 270 disposed in the respective pixel areas PX1, PX2 and PX3 are disposed inside the edges of the pixel electrodes 191a, 191b and 191c. That is, when viewed from a planar shape, the edges adjacent to the data lines 171a and 171b among the edges of the pixel electrodes 191a, 191b and 191c further protrude toward the data lines 171a and 171 b than the edges adj acent to the data lines 171a and 171 b among the edges of the second common electrode 270.

A first data voltage is applied to the first pixel electrode 191 a, a second data voltage is applied to the second pixel electrode 191b, and a third data voltage is applied to the third pixel electrode 191 c.

A polarity of the first data voltage applied to the first pixel electrode 191a is different from a polarity of the second data voltage applied to the second pixel electrode 191b and a polarity of the third data voltage applied to the third pixel electrode 191c, and the polarity of the second data voltage and the polarity of the third data voltage are the same as each other. FIG. 4A illustrates a case where the polarity of the first data voltage is a positive polarity (+), and the polarity of the second data voltage and the polarity of the third data voltage are negative polarities (-). However, the invention is not limited thereto, and the polarity of the first data voltage may be a negative polarity, and the polarity of the second data voltage and the polarity of the third data voltage may be positive polarities.

When the first data voltage is applied to the first pixel electrode 191 a, the second data voltage is applied to the second pixel electrode 191b, and the third data voltage is applied to the third pixel electrode 191c, a first fringe field F1 is generated between the first pixel electrode 191a and the second common electrode 270, between the second pixel electrode 191b and the second common electrode 270, and between the third pixel electrode 191c and the second common electrode 270.

A second fringe field F2 is generated between a first branch electrode 191a1 of the first pixel electrode 191a disposed at an outermost side of the first pixel area PX1 adjacent to the second pixel area PX2 and a second branch electrode 191b1 of the second pixel electrode 191b disposed at an outermost side of the second pixel area PX2 adjacent to the first pixel area PX1, and between the first branch electrode 191a1 of the first pixel electrode 191a disposed at an outermost side of the first pixel area PX1 adjacent to the third pixel area PX3 and a third branch electrode 191c1 of the third pixel electrode 191c disposed at an outermost side of the third pixel area PX3 adjacent to the first pixel area PX1.

Further, a third fringe field F3 is generated between the first branch electrode 191a1 of the first pixel electrode 191a disposed at the outermost side of the first pixel area PX1 and the first common electrode 260, between the second branch electrode 191b1 of the second pixel electrode 191b disposed at an outermost side of the second pixel area PX2 and the first common electrode 260, and between the third branch electrode 191c1 of the third pixel electrode 191c disposed at an outermost side of the third pixel area PX3 and the first common electrode 260.

As described above, the insulating layer 80 is disposed on the first common electrode 260. Accordingly, a size of the third fringe field F3 generated between the first branch electrode 191a1 of the first pixel electrode 191a in the first pixel area PX1 disposed at the outermost side of the first pixel area PX1 and the first common electrode 260 is smaller than a size of the second fringe field F2 generated between the first branch electrode 191a1 of the first pixel electrode 191a and the second branch electrode 191b1 of the second pixel electrode 191b, and between the first branch electrode 191a1 of the first pixel electrode 191a and the third branch electrode 191c1 of the third pixel electrode 191c.

That is, at the outermost sides of the first pixel area PX1, the second pixel area PX2, and the third pixel area PX3, a size of the second fringe field F2 in a horizontal direction in a cross section is larger than a size of the third fringe field F3 in a vertical direction in a cross section.

Accordingly, since the liquid crystal molecules move by the fringe field in the horizontal direction even at the outermost sides of the first pixel area PX1, the second pixel area PX2, and the third pixel area PX3, like a portion A of FIG. 4B, transmittance is not decreased even at the edges of the respective pixel areas PX1, PX2 and PX3.

Like an existing liquid crystal display, when the first common electrode 260 is not provided, and the second common electrode 270 provided throughout the pixel area is disposed on the insulating layer 80, in the first branch electrode 191a1, the second branch electrode 191b2 and the third branch electrode 191c1 disposed at the outermost sides of the respective pixel areas PX1, PX2 and PX3, the size of the fringe field in the vertical direction to the second common electrode 270 is relatively increased, and as a result, the liquid crystal molecules disposed at the edges of the respective pixel areas PX1, PX2 and PX3 are affected by both the fringe field generated in the horizontal direction and the fringe field generated in the vertical direction. Due to the effect of the fringe fields applied in different directions, directivity of the fringe field is reduced, and as a result, transmittance of the LCD may be decreased at the edges of the respective pixel areas PX1, PX2 and PX3.

However, according to the LCD according to the exemplary embodiment of the invention, since the first common electrode 260 is disposed below the insulating layer 80 and the second common electrode 270 disposed on the insulating layer 80 is not provided at the edge of the pixel area except for the connecting portion 272, the liquid crystal molecules disposed at the edge of the pixel area are substantially affected by the fringe field in the horizontal direction, thereby preventing deterioration of transmittance which may occur at the edge of the pixel area.

Next, a case where a data voltage is applied to the first pixel electrode 191a, and the data voltages are not applied to the second pixel electrode 191b and the third pixel electrode 191c disposed at both sides of the first pixel electrode 191a will be described with reference to FIGS. 5A and 5B.

Referring to FIG. 5A, a first data voltage is applied to the first pixel electrode 191a, and the data voltages are not applied to the second pixel electrode 191b and the third pixel electrode 191c to be turned off.

When the first data voltage is applied to the first pixel electrode 191 a, the first fringe field F1 is generated between the first pixel electrode 191a and the second common electrode 270.

The third fringe field F3 is generated between the first branch electrode 191a1 of the first pixel electrode 191a disposed at the outermost side of the first pixel area PX1 and the first common electrode 260.

Further, a fourth fringe field F4 may be generated even between the first branch electrode 191a1 of the first pixel electrode 191a disposed at the outermost side of the first pixel area PX1 adjacent to the second pixel area PX2 and the third pixel area PX3 and the second common electrode 270 disposed in the second pixel area PX2 and the third pixel area PX3. However, according to the LCD according to the exemplary embodiment of the invention, since the second common electrode 270 is not provided at a position overlapping with the data lines 171a and 171b except for the connecting portion, a distance between the first branch electrode 191a1 of the first pixel electrode 191a disposed at the outermost side of the first pixel area PX1 adjacent to the second pixel area PX2 and the third pixel area PX3 and the second common electrode 270 disposed in the second pixel area PX2 and the third pixel area PX3 becomes large. Accordingly, an effect of the fourth fringe field F4 is substantially small.

As such, an effect of the fourth fringe field F4 provided between the second pixel area PX2 and the third pixel area PX3 adjacent to each other at the outermost side of the first pixel area PX1 is substantially small, and the transmittance at the outermost side of the first pixel area PX1 deteriorates due to the effect of the third fringe field F3 generated in the vertical direction like a portion B of FIG. 5B. Accordingly, when an image is displayed in the first pixel area PX1, the liquid crystal molecules which is disposed between the first pixel area PX1 and the second pixel area PX2 or third pixel area PX3 which are adjacent to the first pixel area PX1 and which displays a different color from that of the first pixel area PX1 do not unnecessarily rotate.

When the first common electrode 260 is not provided and the second common electrode 270 provided throughout the pixel area is disposed on the insulating layer 80, the first branch electrode 191a1, the second branch electrode 191b2 and the third branch electrode 191c1 disposed at the outermost sides of the respective pixel areas PX1, PX2 and PX3 are affected by the fourth fringe field F4 generated between the second common electrodes 270 disposed in the adjacent pixel areas. Accordingly, when the image is displayed in the first pixel area PX1, due to the effect of the fourth fringe field F4 applied to the liquid crystal molecules disposed between the first pixel area PX1 and the second pixel area PX2 or third pixel area PX3 which is adjacent to the first pixel area PX1 and displays a different color, a color displayed by the second pixel area PX2 or third pixel area PX3 which is an adjacent pixel at the edge of the first pixel area PX1 may be recognized. As such, when the colors displayed by the adjacent colors are recognized, a mixed color may be generated.

However, according to the LCD according to the exemplary embodiment of the invention, since the first common electrode 260 is disposed below the insulating layer 80, and the second common electrode 270 disposed on the insulating layer 80 is not provided at the edge of the pixel area except for the connecting portion 272, the liquid crystal molecules disposed between the pixel area displaying the image and the adjacent pixel area which is adjacent to the pixel area displaying the image and displays a different color are prevented from unnecessarily rotating, thereby preventing the mixed color generated between the adjacent pixels.

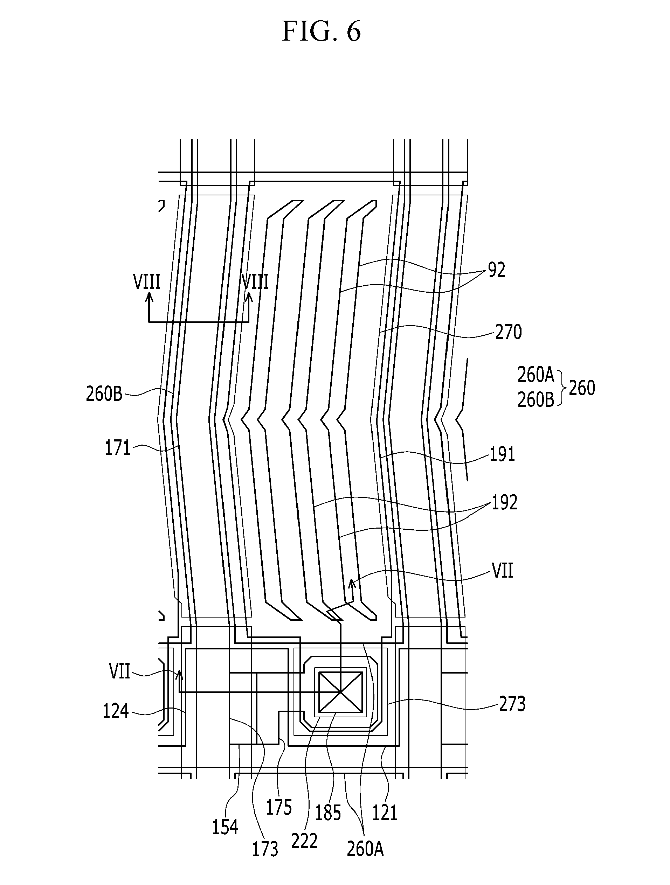

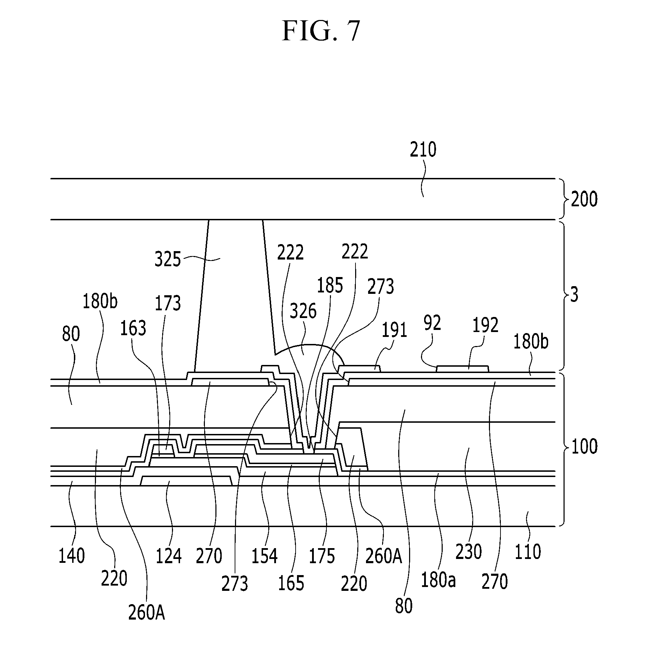

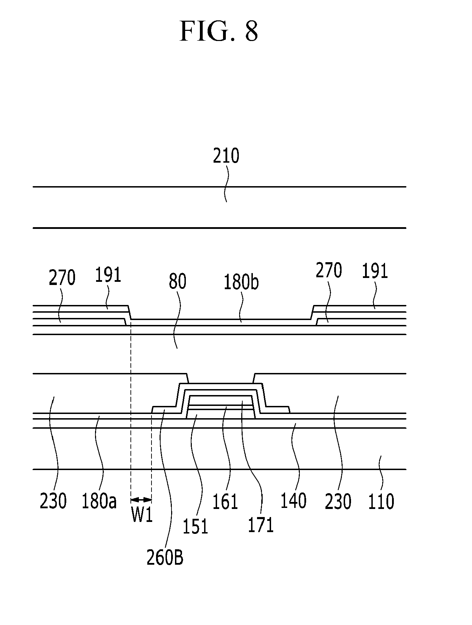

Next, an LCD according to another exemplary embodiment of the invention will be described with reference to FIGS. 6 to 8. FIG. 6 is a plan view illustrating an LCD according to another exemplary embodiment of the invention, FIG. 7 is a cross-sectional view of the LCD of FIG. 6 taken along line VII-VII, and FIG. 8 is a cross-sectional view of the LCD of FIG. 6 taken along line VIII-VIII.

Referring to FIGS. 6 to 8, the LCD according to the exemplary embodiment is similar to the LCD according to the exemplary embodiment illustrated in FIGS. 1 to 3. Accordingly, the description for like constituent elements may be omitted.

However, in the LCD according to the exemplary embodiment, unlike the LCD according to the exemplary embodiment illustrated in FIGS. 1 to 3, the first common electrode 260 is disposed in a region corresponding to the data line 171 and even in a region corresponding to the gate line 121 and the TFT. The first common electrode 260 includes a first portion 260A disposed in the region corresponding to the gate line 121 and the TFT, and a second portion 260B disposed at a position corresponding to the data line 171.

Like the LCD according to the exemplary embodiment illustrated in FIGS. 1 to 3, even in the LCD according to the exemplary embodiment, the light blocking member 220 is provided at a position corresponding to the gate line 121 and the TFT, does not overlap with the pixel electrode 191 except for a portion where the pixel electrode 191 and the drain electrode 175 are connected to each other, and does not overlap with the data line 171 except for a portion where the gate line 121 and the data line 171 overlap with each other. A third opening 222 is defined in the light blocking member 220 by removing a periphery of the light blocking member 220 at the first contact hole 185 where the drain electrode 175 and the pixel electrode 191 are connected to each other. Further, the first portion 260A of the first common electrode 260 overlaps with the light blocking member 220, and the second portion 260B of the first common electrode 260 does not overlap with the light blocking member 220. The first portion 260A of the first common electrode 260 and the light blocking member 220 around the first contact hole 185 where the drain electrode 175 and the pixel electrode 191 are connected are removed to define the third opening 222.

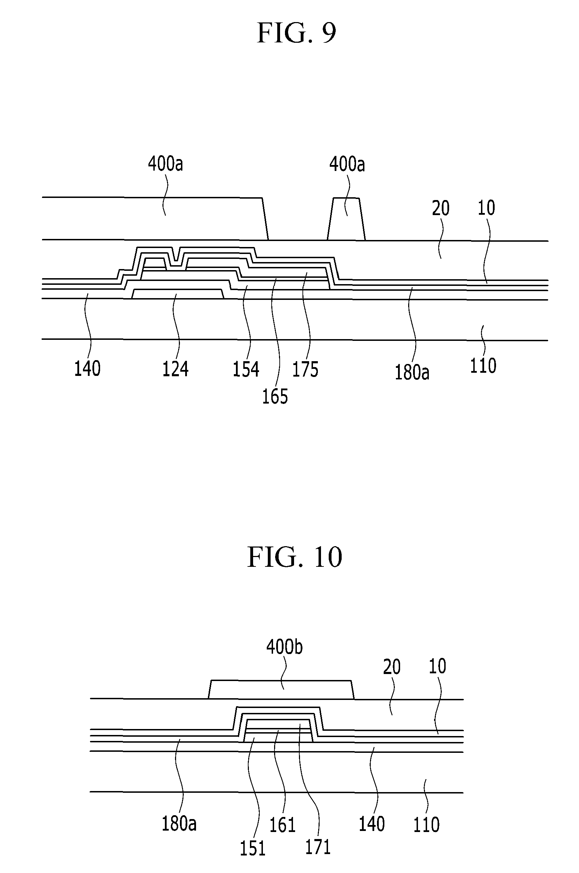

The first portion 260A of the first common electrode 260 and the light blocking member 220 which overlap with each other have edges overlapping with each other. That is, the first common electrode 260 and the light blocking member 220 may be simultaneously provided by one photolithography process by using one mask. This will be described with reference to FIGS. 9 to 16. FIGS. 9 to 16 are cross-sectional views illustrating a manufacturing method of an LCD device according to an exemplary embodiment of the invention in sequence.

First, referring to FIGS. 9 and 10, a transparent conductive layer 10 providing the first common electrode 260 and an opaque layer 20 providing the light blocking member 220 are sequentially laminated, and a photosensitive film is laminated thereon. Thereafter, by performing exposure using a photomask having a translucent area in addition to a light transmitting area and a light blocking area, a first photosensitive film pattern 400a and a second photosensitive film pattern 400b having different thicknesses according to a position are provided. In this case, the first photosensitive film pattern 400a is provided at a portion where the first portion 260A of the first common electrode 260 and the light blocking member 220 overlapping with each other are provided, and the second photosensitive film pattern 400b is provided at a position where the second portion 260B of the first common electrode 260 is provided. In an exemplary embodiment, a thickness of the first photosensitive film pattern 400a is larger than that of the second photosensitive film pattern 400b.

As a method of varying the thickness of the photosensitive film according to a position, various methods are included, and for example, a method of positioning the translucent area in addition to the light transmitting area and the light blocking area in the photomask is included. A slit pattern, a lattice pattern, or a thin film having medium transmittance or a medium thickness is provided in the translucent area. In the case of using the slit pattern, a width of the slit or a distance between the slits in a plan view may be smaller than resolution of an exposer used in a photolithography process. As another example, a method of using a photosensitive film capable of reflowing is included. That is, the photosensitive film capable of reflowing is provided by a general exposure mask having only the light transmitting area and the light blocking area and then reflows, and flows down to a region where the photosensitive film does not remain to provide a thin portion. As such, a manufacturing method is simplified by omitting one photolithography process.

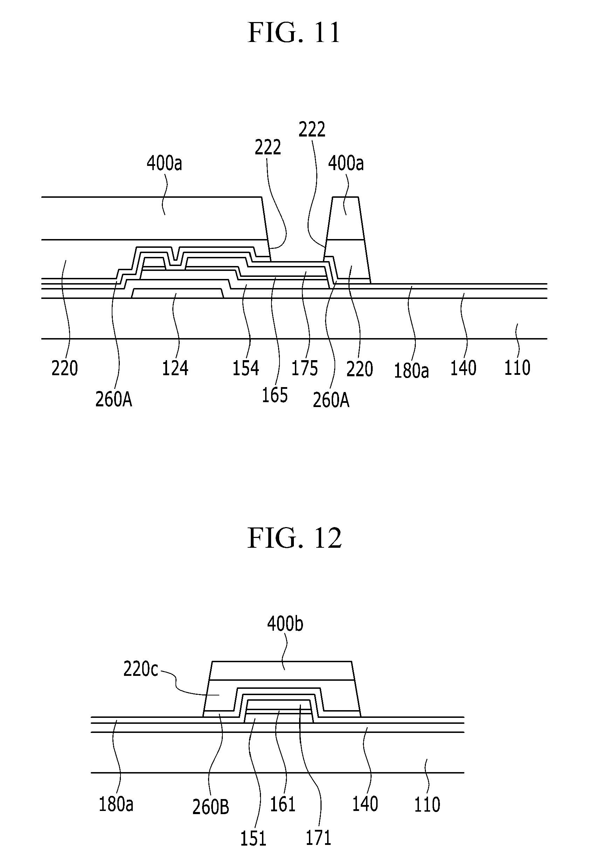

Next, as illustrated in FIGS. 11 and 12, by using the first photosensitive film pattern 400a and the second photosensitive film pattern 400b as an etching mask, by etching the opaque layer 20 and the transparent conductive layer 10, the first portion 260A and the second portion 260B of the first common electrode 260, and the light blocking member 220 disposed on the first portion 260A of the first common electrode 260 and a dummy light blocking member 220c disposed on the second portion 260B of the first common electrode 260 are provided. In this case, a third opening 222 defined on and/or around the drain electrode 175 is defined in the first portion 260A of the first common electrode 260 and the light blocking member 220.

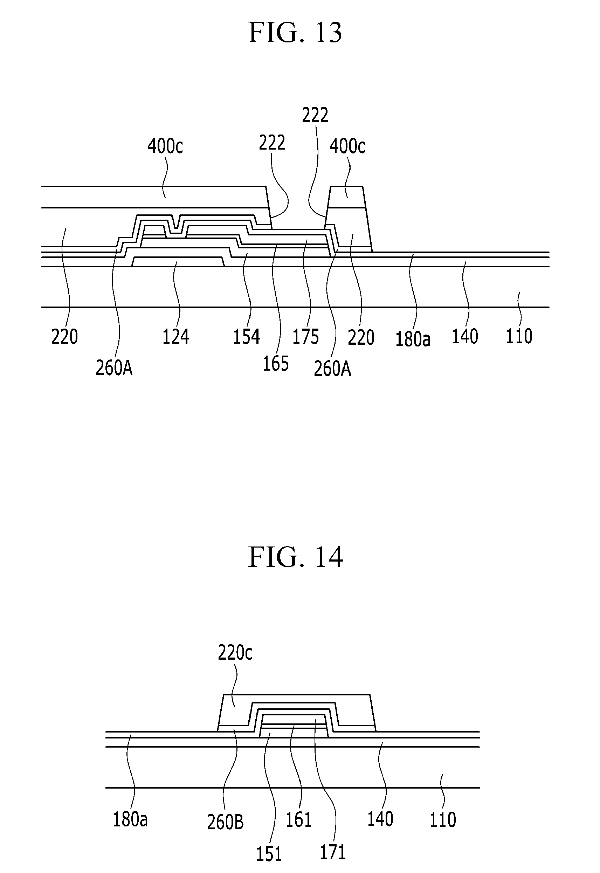

Referring to FIGS. 13 and 14, a third photosensitive film pattern 400c is provided by decreasing a height of the first photosensitive film pattern 400a, and the second photosensitive film pattern 400b is removed to expose the dummy light blocking member 220c disposed on the second portion 260B of the first common electrode 260.

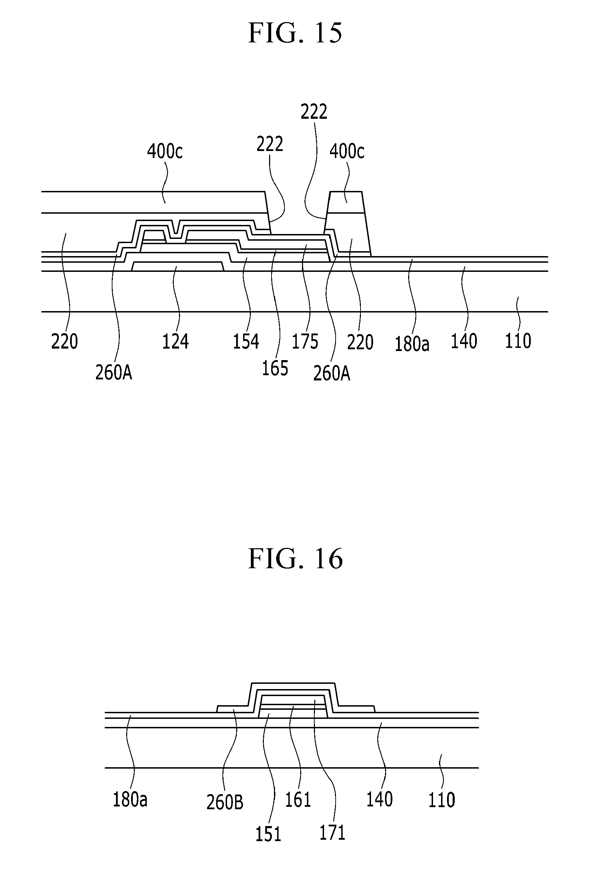

As illustrated in FIGS. 15 and 16, by using the third photosensitive film pattern 400c as an etching mask, the dummy light blocking member 220c disposed on the second portion 260B of the common electrode 260 is removed, and the third photosensitive film pattern 400c is removed.

As such, by providing the photosensitive film patterns having different heights according to a position, the first common electrode 260 and the light blocking member 220 may be provided by one photolithography process.

In the illustrated exemplary embodiment, the first common electrode 260 is disposed below the light blocking member 220 or the color filter 230, but the first common electrode 260 may be disposed on the light blocking member 220 or the color filter 230.

The second common electrode 270 may not be disposed in a region corresponding to the gate line 121 and the data line 171. However, as illustrated in FIG. 6, a connecting portion for connecting the second common electrodes 270 disposed in the adjacent pixels may overlap with the data line 171.

An LCD according to another exemplary embodiment of the invention may further include a common voltage line disposed on the same layer as the gate line 121 or the data line 171, and the second common electrode 270 is connected to the common voltage line through a contact hole defined in an insulating layer disposed on the common voltage line to receive the common voltage.

Many features of the LCD according to the exemplary embodiment described above with reference to FIGS. 1 to 3 may be all applied to the LCD according to the exemplary embodiment. Accordingly, the LCD according to the exemplary embodiment has characteristics and effects as described with reference to FIGS. 4A and 4B and FIGS. 5A and 5B.

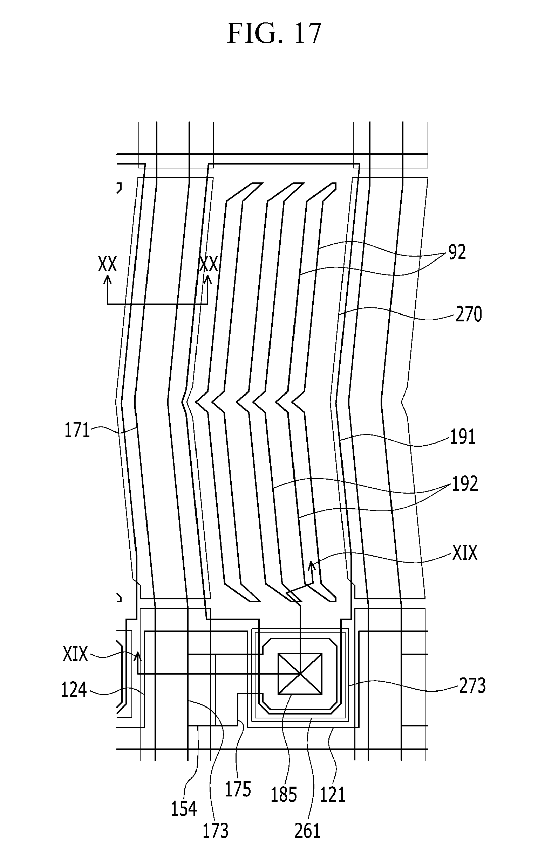

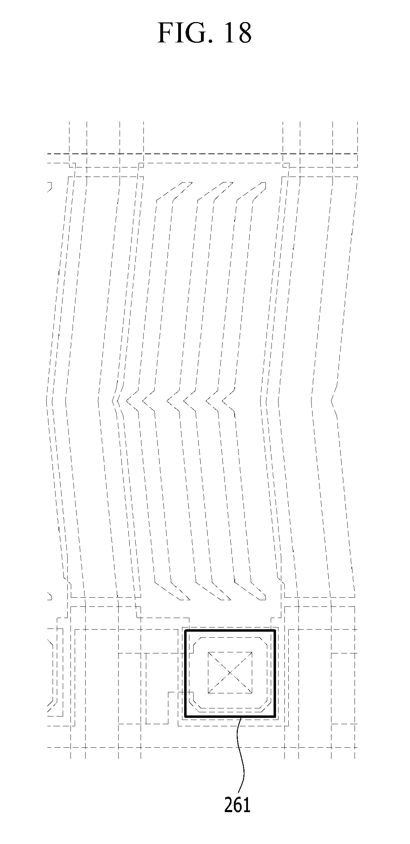

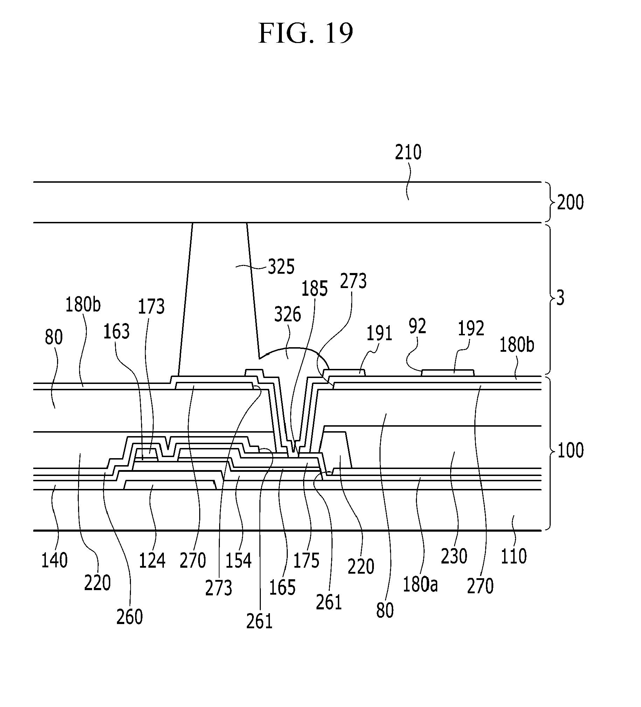

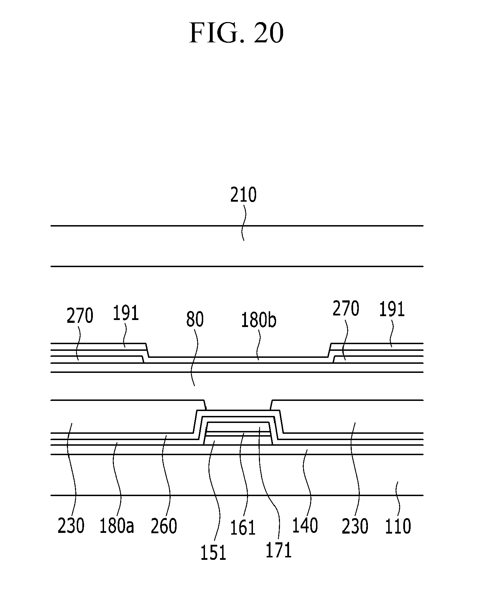

Next, an LCD according to another exemplary embodiment of the invention will be described with reference to FIGS. 17 to 20. FIG. 17 is a plan view illustrating an LCD according to another exemplary embodiment of the invention, FIG. 18 is a plan view for describing a shape of a first common electrode of the LCD of FIG. 17, FIG. 19 is a cross-sectional view of the LCD of FIG. 17 taken along line XIX-XIX, and FIG. 20 is a cross-sectional view of the LCD of FIG. 17 taken along line XX-XX.

Referring to FIGS. 17 to 20, the LCD according to the exemplary embodiment is similar to the LCD according to the exemplary embodiment illustrated in FIGS. 1 to 3, and the LCD according to the exemplary embodiment illustrated in FIGS. 6 to 8. The detailed description for like constituent elements is omitted.

However, referring to FIGS. 17 to 20, the first common electrode 260 of the LCD according to the exemplary embodiment is disposed on the entire surface of the first insulation substrate 110.

In more detail, the first common electrode 260 is disposed on the entire surface of the first insulation substrate 110, and is removed around the first contact hole 185 where the drain electrode 175 and the pixel electrode 191 are connected to each other to define a fourth opening 261.

In the illustrated exemplary embodiment, the first common electrode 260 is disposed below the light blocking member 220 or the color filter 230, but the first common electrode 260 may be disposed on the light blocking member 220 or the color filter 230.

The second common electrode 270 may not be disposed in a region corresponding to the gate line 121 and the data line 171. However, as illustrated in FIG. 17, a connecting portion for connecting the second common electrodes 270 disposed in the adjacent pixels may overlap with the data line 171.

An LCD according to another exemplary embodiment of the invention may further include a common voltage line disposed on the same layer as the gate line 121 or the data line 171, and the second common electrode 270 is connected to the common voltage line through a contact hole defined in an insulating layer disposed on the common voltage line to receive the common voltage.

Many features of the liquid crystal displays according to the exemplary embodiments described with reference to FIGS. 1 to 3 and 6 to 8 may all be applied to the LCD according to the exemplary embodiment. Accordingly, the LCD according to the exemplary embodiment has characteristics and effects as described with reference to FIGS. 4A and 4B and FIGS. 5A and 5B.

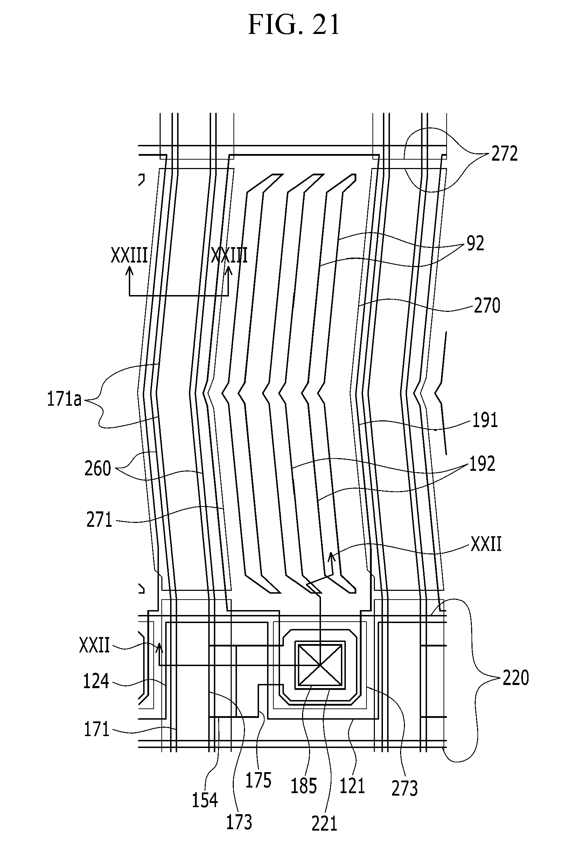

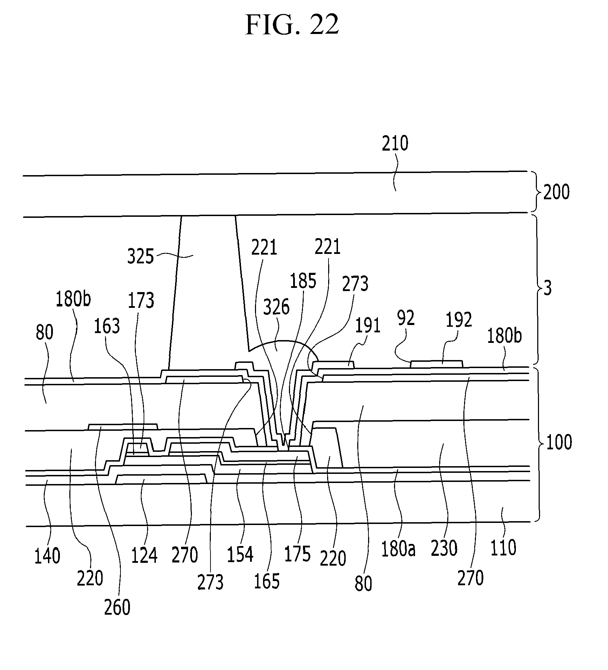

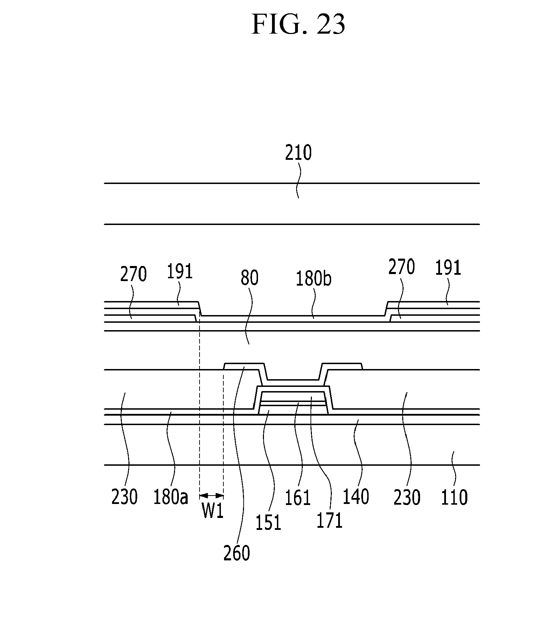

Next, an LCD according to another exemplary embodiment of the invention will be described with reference to FIGS. 21 to 23. FIG. 21 is a plan view illustrating an LCD according to another exemplary embodiment of the invention, FIG. 22 is a cross-sectional view of the LCD of FIG. 21 taken along line XXII-XXII, and FIG. 23 is a cross-sectional view illustrating the LCD of FIG. 21 taken along line XXIII-XXIII.

Referring to FIGS. 21 to 23, the LCD according to the exemplary embodiment is similar to the LCD according to the exemplary embodiment illustrated in FIGS. 1 to 3. The detailed description for like constituent elements is omitted.

However, in the LCD according to the exemplary embodiment, unlike the LCD according to the exemplary embodiment illustrated in FIGS. 1 to 3, the first common electrode 260 is disposed on the light blocking member 220 or the color filter 230. That is, the first common electrode 260 is provided between the light blocking member 220 or the color filter 230 and the insulating layer 80.

Further, the second common electrode 270 may not be disposed in a region corresponding to the gate line 121 and the data line 171. However, as illustrated in FIG. 21, a connecting portion for connecting the second common electrodes 270 disposed in the adjacent pixels may overlap with the data line 171.

An LCD according to another exemplary embodiment of the invention may further include a common voltage line disposed on the same layer as the gate line 121 or the data line 171, and the second common electrode 270 is connected to the common voltage line through a contact hole provided in an insulating layer disposed on the common voltage line to receive the common voltage.

Many features of the liquid crystal displays according to the exemplary embodiments described with reference to FIGS. 1 to 3, 6 to 8 and 17 to 20 may all be applied to the LCD according to the exemplary embodiment. Accordingly, the LCD according to the exemplary embodiment has characteristics and effects as described with reference to FIGS. 4A and 4B and FIGS. 5A and 5B.

While this invention has been described in connection with what is presently considered to be practical exemplary embodiments, it is to be understood that the invention is not limited to the disclosed exemplary embodiments, but, on the contrary, is intended to cover various modifications and equivalent arrangements included within the scope of the appended claims.

## Claims

1. A liquid crystal display, comprising:
an insulation substrate;
a gate line and a data line disposed on the insulation substrate;
a first passivation layer disposed on the gate line and the data line;
a first common electrode which is disposed on the first passivation layer and overlaps with the data line;
an insulating layer disposed on the first common electrode;
a second common electrode disposed on the insulating layer;
a second passivation layer disposed on the second common electrode; and
a pixel electrode disposed on the second passivation layer.

2. The liquid crystal display of claim 1, wherein:
the first common electrode overlaps with the gate line, and
the first common electrode includes a first portion which overlaps with the gate line and a second portion which overlaps with the data line.

3. The liquid crystal display of one of the claims 2-3, further comprising:
a light blocking member and a color filter disposed below the insulating layer,
wherein the first common electrode is disposed on or below the light blocking member and the color filter.

4. The liquid crystal display of one of the preceding claims, wherein:
a first edge of the first common electrode, and a second edge most adjacent to the first common electrode among edges of the pixel electrode, are separated from each other.

5. The liquid crystal display of claim 4, wherein:
a distance between the first edge and the second edge is about 2.45 micrometers to about 3.45 micrometers.

6. The liquid crystal display of one of the claims 4-5, wherein:
an edge adjacent to the data line among the edges of the pixel electrode further protrudes toward the data line than an edge adjacent to the data line among edges of the second common electrode.

7. The liquid crystal display of one of the preceding claims, wherein:
the second common electrode has a plate-like planar shape, the pixel electrode includes a plurality of branch electrodes, and the plurality of branch electrodes overlaps with the second common electrode.

8. The liquid crystal display of one of the claim 2-7, further comprising:
a light blocking member and a color filter disposed below the insulating layer,
wherein the first portion of the first common electrode overlaps with the light blocking member.

9. The liquid crystal display of claim 8, wherein:
the first common electrode is disposed below the light blocking member, and
at an overlapping portion of the first common electrode and the light blocking member, edges of the first common electrode and the light blocking member overlap with each other.

10. The liquid crystal display of claim 9, wherein:
a first edge of the first common electrode, and a second edge most adjacent to the first common electrode among edges of the pixel electrode, are separated from each other.

11. The liquid crystal display of claim 10, wherein:
a distance between the first edge and the second edge is about 2.45 micrometers to about 3.45 micrometers.

12. The liquid crystal display of claim 11, wherein:
an edge adjacent to the data line among the edges of the pixel electrode further protrudes toward the data line than an edge adjacent to the data line among edges of the second common electrode.

13. The liquid crystal display of claim 12, wherein:
the second common electrode has a plate-like planar shape, the pixel electrode includes a plurality of branch electrodes, and the plurality of branch electrodes overlaps with the second common electrode.

14. The liquid crystal display of claim 1, wherein:
a first edge of the first common electrode, and a second edge most adjacent to the first common electrode among edges of the pixel electrode, are separated from each other.

15. The liquid crystal display of claim 1, wherein:
the first common electrode is disposed on an entire surface of the insulation substrate, and
the second common electrode is disposed in a region which overlaps with the pixel electrode.
